# EUROPEAN PATENT SPECIFICATION

(11) **EP 0 632 188 B1**
(45) Date of publication and mention of the grant of the patent: **27.03.1996**
(21) Application number: 94109569.7
(22) Date of filing: 21.06.1994
(51) Int. Cl.: F01N 3/02, F01N 9/00

(54) **Exhaust emission control device for diesel engine**
Vorrichtung zur Steuerung der Abgasemission für Dieselmotoren
Dispositif de commande de l'émission des gaz d'échappement pour un moteur diesel

(30) Priority: 22.06.1993 JP 150873/93
(43) Date of publication of application: 04.01.1995
(73) Proprietor: TOYOTA JIDOSHA KABUSHIKI KAISHA, Aichi-ken (JP)
(72) Inventor: Yoshida, Hideji, Kariya-shi, Aichi-ken 448 (JP); Hobo, Nobuhito, c/o Nippon Denso Co., Ltd., Kariya-shi, Aichi-ken 448 (JP); Kato, Keiichi, c/o Nippon Denso Co., Ltd., Kariya-shi, Aichi-ken 448 (JP); Kobashi, Kiyoshi, Toyota-shi, Aichi (JP); Hayashi, Koutaro, Toyota-shi, Aichi (JP); Taniguchi, Hiroyuki, c/o Kabushiki Kaisha Toyoda, Kariya-shi, Aichi-ken (JP)
(74) Representative: Pellmann, Hans-Bernd, Dipl.-Ing.

(56) References cited:
- EP-A- 0 389 891
- PATENT ABSTRACTS OF JAPAN vol. 17, no. 41 (M-1359) 26 January 1993 & JP-A-04 259 620 (TOYOTA MOTOR) 16 September 1992
- PATENT ABSTRACTS OF JAPAN vol. 10, no. 14 (M-447) (2071) 21 January 1986 & JP-A-60 175 722 (TOYOTA JIDOSHA) 9 September 1985

## Description

### Field of the Invention

The present invention relates to an exhaust emission control device for a diesel engine.

### Description of the Related Art

An exhaust emission control device has a filter disposed in an exhaust gas passage in a diesel engine to collect harmful particulates contained in the exhaust gas. This exhaust emission control device is disclosed in Japanese Unexamined Patent Publication No. 4-259620. This device has an electric heater connected to an end of the filter. When activated, the heater burns the particulates collected by the filter to thereby regenerate the filter. At the time of the filter regeneration, the voltage of a battery as a power source of the heater is detected. A duty cycle of power to be supplied to the heater is determined according to this detected voltage and a predetermined heater voltage. Based on the duty cycle, the time for supplying the battery power to the heater is controlled and the steady power is supplied to the heater.

Similar control is performed on an electric air pump which supplies the secondary air to the filter.

Since the current passing through a harness, which connects the battery to the heater, causes a voltage drop due to the internal resistance, the value of the voltage detected as above does not accurately represent the voltage of the heater. This voltage drop is a factor when the computation of the duty cycle is performed, thus lowering the control precision. As a result, the power of the heater deviates from the target value. Therefore, the particulates collected by the filter are burned incompletely, resulting in insufficient regeneration of the filter.

A similar problem occurs in the electric air pump for supplying the secondary air to the filter. Consequently, the secondary air needed to burn the particulates is not sufficiently supplied to the heater, deteriorating the filter regeneration.

Therefore, efficiency of the control device decreases over a long use.

### SUMMARY OF THE INVENTION

It is therefore a primary object of the present invention to provide an exhaust emission control device for a diesel engine, which can effectively filter the exhaust gas even over a long use.

It is another object of the present invention to provide an exhaust emission control device, which has excellent filter regeneration and can control electric devices, such as an electric heater and electric air pump, at a high precision.

To achieve the above objects, there is provided an exhaust emission control device for a diesel engine, which includes a filter disposed in an exhaust gas passage for collecting particulates contained in exhaust gas. The device has a burning member which is connected to a power supply for burning the particulates to regenerate the filter when the filter collects a predetermined amount of the particulates. The burning member is driven by an electric duty signal based on a difference between the value of actual power supplied to the burning member before burning the particulates and a predetermined target power value for burning the particulates. The device further has detecting member which is connected to both end portions of the burning member and the power supply for detecting the value of actual power.

With the above structure, at the enabling cycle of the duty signal, power supplied to the burning member then, not a power supply voltage, is detected accurately.

### BRIEF DESCRIPTION OF THE DRAWINGS

Fig. 1 is a diagram illustrating the general structure of an exhaust emission control device for a diesel engine;
Fig. 2 is a flowchart for explaining the operation of a CPU;
Fig. 3 is a chart showing the relationship between target heater power and actual heater power according to the present invention; and
Fig. 4 is a chart showing the relationship between target heater power and actual heater power when samplers and hold circuits are omitted.

### DETAILED DESCRIPTION OF THE PREFERRED EMBODIMENT

One preferred embodiment of the present invention will now be described referring to the accompanying drawings.

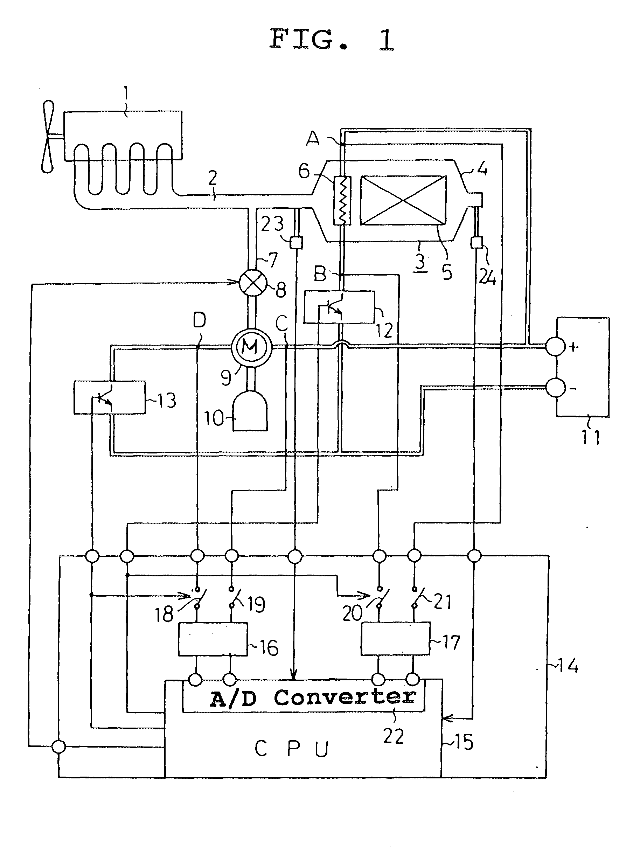

As illustrated in Fig. 1, an exhaust emission control device 3 is provided in an exhaust pipe 2 of a diesel engine 1. The control device 3 has a housing 4, which is connected to the exhaust pipe 2, so that the exhaust gas passes through this housing 4. A filter 5 is disposed in the housing 4. The filter 5 is made of porous ceramic. An electric heater (heating coil) 6 is disposed upstream of the filter 5, with respect to the flowing direction of the exhaust gas.

A secondary air supply pipe 7 branches from the exhaust pipe 2 at an upstream point of the control device 3. An electromagnetic valve 8 is disposed in this pipe 7 to prevent the counterflow of the exhaust gas in the secondary air supply passage. An electric air pump 9 is also disposed in the pipe 7 at an upstream point of the valve 8 The air pump 9 has an electric motor M. The air pump 9 is driven by the motor M. When the valve 8 is open and the air pump 9 is driven, air is supplied into the exhaust pipe 2 via an air cleaner 10 and the pipe 7.

The electric heater 6 is connected to a battery 11 so as to form a power supply circuit. A first semiconductor switching element (transistor) 12 is connected to power lines. Predetermined power can be supplied to the electric heater 6 by controlling the duty cycle of the transistor 12.

The electric motor M of the air pump 9 is connected to the battery 11 to form another power supply circuit. A second semiconductor switching element (transistor) 13 is connected to the power lines. Predetermined power can be supplied to the electric motor M of the air pump 9 by controlling the duty cycle of the transistor 13.

An electronic control unit (ECU) 14 has a CPU 15, hold circuits 16, 17 and switches 18, 19 and 20, 21. The CPU 15 includes an A/D converter 22 to which the hold circuits 16 and 17 are electrically connected.

A node A at an upstream point of the electric heater 6 is connected via the switch 21 to the hold circuit 17. Likewise, a node B at a downstream point of the electric heater 6 is connected via the switch 20 to the hold circuit 17. The CPU 15 obtains the difference between voltages at the nodes A and B to detect the value of the voltage applied to the electric heater 6.

A node C at an upstream point of the electric motor M of the air pump 9 is connected via the switch 19 to the hold circuit 16. Likewise, a node D at a downstream point of the electric motor M is connected via the switch 18 to the hold circuit 16. The CPU 15 acquires the difference between voltages at the nodes C and D to detect the value of the voltage applied to the electric motor M of the air pump 9.

The CPU 15 is connected to the first transistor 12 to control its duty cycle. A line connected to a base of the first transistor 12 branches into lines for providing signals to switches 20 and 21. At the time the duty cycle of the transisor 12 is controlled, the switches 20 and 21 are closed when a duty signal is enabled (ON).

The CPU 15 is also connected to the second transistor 13 to control its duty cycle. A line connected to base of the tansistor 13 branches into lines for providing signals to switches 18 and 19. At the time the duty cycle of the the second transistor 13 is controlled, the switches 18 and 19 are closed when the duty signal is enabled (ON).

More specifically, by selectively opening and closing the switches 18, 19 and 20, 21, the CPU 15 selectively receives either a signal for the case where the electric heater 6 and the electric motor M are activated (ON) and a signal for the case where they are deactivated (OFF). The hold circuits 16 and 17 to hold the voltages applied when the heater 6 and motor M are activated. Subsequently, the A/C converter 22 converts the voltages into digital values.

The CPU 15 is further connected to the electromagnetic valve 8 to selectively open and close the valve 8.

Pressure sensors 23 and 24 are respectively disposed upstream and downstream of the control device 3 to detect the upstream pressure and downstream pressure. Based on signals from the pressure sensors 23 and 24, the CPU 15 detects the upstream pressure and downstream pressure with respect to the device 3. The CPU 15 also acquires the difference between both pressures to compute the pressure loss in the device 3. When the pressure loss exceeds a predetermined value, the CPU 15 determines that the amount of particulates collected by the filter 5 has reached a level at which the particulates should be burned and the filter 5 should be regenerated.

The operation of the control device 3 will be described below.

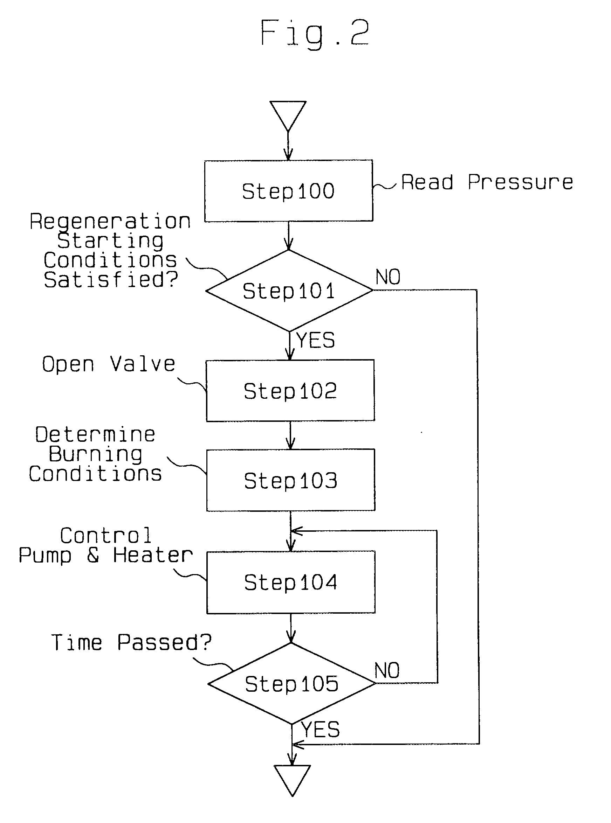

Fig. 2 illustrates a process the CPU 15 executes when the diesel engine is running. First, the CPU 15 computes the pressure at the upstream and downstream points of the control device 3 based on the signals from the pressure sensors 23 and 24 in step 100. In step 101, the CPU 15 computes the pressure loss in the device 3 and determines the timing of regenerating the filter 5. More specifically, when the amount of collected particulates reaches a predetermined amount, i.e. the conditions for the filter regeneration are satisfied, the CPU 15 starts regenerating the filter 5. When the filter regeneration starts, the CPU 15 opens the electromagnetic valve 8 in step 102 to permit the supply of the secondary air into the device 3.

In step 103, the CPU 15 determines the conditions under which the regeneration of the filter 5 is controlled. In this step 103, a target rotational speed of the electric motor M and a target temperature value of the electric heater 6 are determined. The CPU 15 then determines a voltage necessary to drive the motor M at the target rotational speed and target heater power necessary to keep the heater 6 at the target temperature.

Next, the CPU 15 controls the duty cycle for deiving the electric motor M of the air pump 9 via the second transistor 13 to set the rotational speed of the motor M to the target rotational speed in step 104. Likewise, the CPU 15 controls the duty cycle for actuating the heater 6 via the first transistor 12 to set the temperature of the heater 6 to the target temperature.

In controlling the duty cycle of the first transistor 12, the CPU 15 closes the switches 20 and 21 in synchronism with the enabling sequence of the duty signal. When the switches 20 and 21 are closed, the CPU 15 detects the voltage applied to the electric heater 6 and then controls the duty cycle in such a way that power corresponding to the target temperature value is supplied to the heater 6. Likewise, in controlling the duty cycle of the second transistor 13, the CPU 15 closes the switches 18 and 19 in synchronism with the enabling sequence of the duty signal.

When the switches 18 and 19 are closed, the CPU 15 detects the voltage applied to the motor M, and then controls the duty cycle in such a way that target motor power corresponding to the target rotational speed is supplied to the motor M.

The above control should be performed accurately. If the controlled values are inaccurate, a heat-oriented damage or crack may occur on the filter 5 and/or burnt residues of the particulates may be produced.

The CPU 15 determines in step 105 whether or not the regeneration of the filter 5 has been carried out for a predetermined period of time. If said time has passed, the CPU 15 determines that the regeneration of the filter 5 has completed, and terminates the regeneration control.

In the above-described control sequence, when the voltages applied to the electric motor M of the air pump 9 and the electric heater 6 change, the flow rate of the secondary air supplied to the device 3 and the heater temperature vary greatly. It is therefore necessary to accurately measure the applied voltage for controlling the duty cycle. However, the applied voltages vary due to various factors; for instance, if there is a variation in the physical property of the battery 11, a variation in its output impedance, the electric resistance of the harness or the like, a voltage drop occurs at such a variation-causing portion by the current flowing there. In performing the duty cycle control with a pulse wave, particularly, the voltage at the portion in question changes greatly in synchronism with the pulse wave. If the applied voltages are given to the CPU 15 directly from the A/D converter 22 in the CPU 15 without using the switches 18 to 21 and the hold circuits 16 and 17, the voltage drop becomes a deviation, resulting in incorrect control operation.

In view of the above, the CPU 15 selectively opens and closes the switches 18 to 21 in synchronism with pulse sequence of the the control signals supplied to the transistors 12 and 13. When the motor M and heater 6 are activated, the switches 18, 19 and 20, 21 are closed and the two voltage diferencials across the motor M and heater 6 (applied voltages) are supplied to the hold circuits 16 and 17, respectively. When the motor M and heater 6 are not activated, the switches 18, 19 and 20, 21 are opened, thus preventing deviation-containing voltages from being supplied the hold circuits 16 and 17. Accordingly, this allows the accurate voltages to be applied to the motor M and heater 6. These voltages are then converted into digital values by the A/D converter 22.

Thereafter, the values of the duty cycles are determined in such a way that the negative digital voltage values of the motor M and heater 6 are subtracted from the positive digital voltage values of the motor M and heater 6, and the resultant values are processed as the applied voltages in the CPU 15 to become the voltages that correspond to the target values.

As the switches 18, 19 and 20, 21 are selectively opened and closed in accordance with the ON or OFF status of the transistors 12 and 13, and the hold circuits 16 and 17 are provided in this embodiment, the precision in volatage controlling for the heater 6 and motor M becomes higher. The reason for the above will be discussed below in detail.

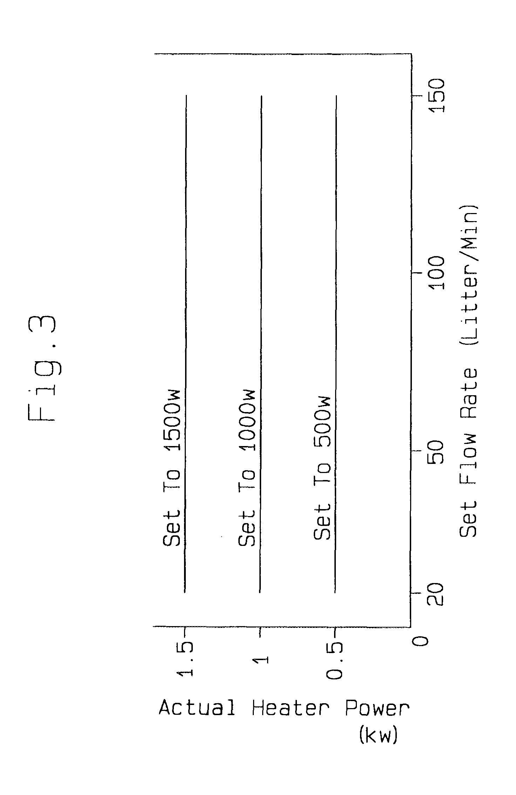

Fig. 3 shows the results of measuring the target heater power and actual heater power at the time the air pump 9 is driven while changing the flow rate of the secondary air by changing the rotational speed of the motor M by the system shown in Fig. 1. In this case, when the duty signal for the heater 6 is disabled, the switches 20 and 21 are opened, so that the voltage applied to the heater 6 is not supplied to the A/D converter 22 in the CPU 15. When the duty signal is enabled, therefore, the target heater power and actual heater power input via the hold circuit 17 to the A/D converter 22 match with each other.

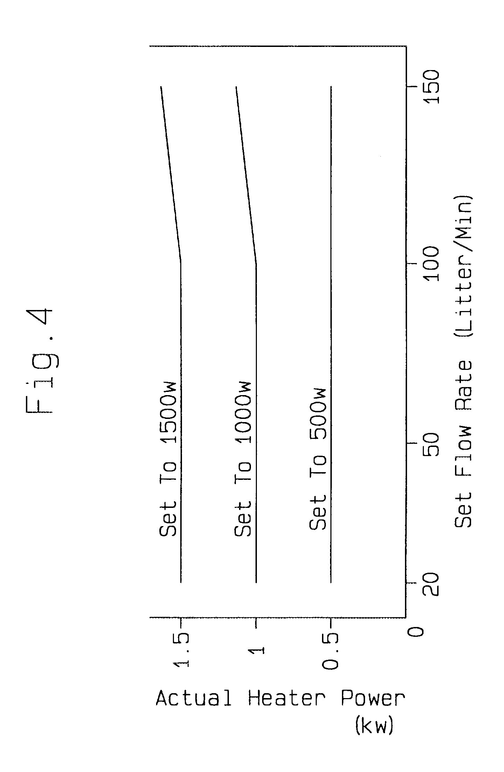

Fig. 4 shows the results of measuring the target heater power and actual heater power at the time the air pump 9 is driven while changing the flow rate of the secondary air without using the switches 18 to 21 and hold circuits 16 and 17 in the system in Fig. 1. In this case, the applied voltages when the duty signal for the heater 6 is disabled are also supplied to the A/D converter 22, causing a voltage deviation. This error causes the target heater power and actual heater power to differ from each other.

Further, according to this embodiment, the power lines are provided with detection lines for detecting the voltage across the heater 6, and the switches 20 and 21 are connected to the detection lines. The switches 20 and 21 are closed when the duty signal is enabled (at the timing of actuating the heater 6). The voltage applied to the heater 6 then is detected which allows the duty cycle to be controlled in such a way that the actual heater power matches with the target heater power.

According to the conventional device which detects a battery voltage, when the energizing current flows, a voltage drop due to the internal resistance of the harness occurs and reflects as the voltage diviation on the duty signal then, thus lowering the control precision. According to this embodiment, however, given an enabled duty signal the voltage across the heater 6 is detected without reference to the battery voltage and without accompanying the voltage diviation resulting from the internal resistance of the harness. Therefore, the voltage detection is not affected by the internal resistance of the harness and the power to the heater 6 does not deviate from the target value, thus ensuring very accurate control of the heater 6.

In addition, according to this embodiment, the power lines for the electric air pump 9 are equipped with detection lines for detecting the voltage across the electric air pump 9. The switches 18 and 19 are connected to those detection lines, and closed at the air-pump energizing timing of the duty signal. The voltage applied to the air pump 9 then is detected, which allows the duty cycle to be controlled in such a way that the actual supplied voltage matches with the target supplied voltage.

The electric air pump 9 can therefore be controlled at high precision as in the case of the electric heater 6.

The present invention is not limited to the above-described embodiment, but may be modified in various manners within the scope and spirit of this invention. For example, although the switches 18 to 21 are used in this embodiment, the CPU 15 can determine whether the duty cycle for the heater 6 is enabled or disabled. Instead of using the switches 18 to 21, therefore, the CPU 15 controls the conversion timing of the A/D converter 22.

Although the duty cycle control for the heater 6 and the duty cycle control for the air pump 9 are both performed in the above-described embodiment, this invention may be modified to separately perform the duty cycle control for the heater 6 and the duty cycle control for the air pump 9. Disclosed is an exhaust emission control device for a diesel engine, which has a filter (5) disposed in an exhaust gas passage (2) for collecting particulates contained in exhaust gas. An electric heater (6) and an electric motor (M) accommodated in an air pump (9) are connected to and actuated by a battery (11). When the filter collects a predetermined amount or more of the particulates, the heater and pump are actuated to burn the particulates to regenerate the filter. The heater and motor are driven by an electric duty signal based on the difference between a value of actual power, supplied to the heater and motor before burning the particulates, and a predetermined target power value for burning the particulates. A detecting device (15, 16, 17, 18-21) detecting the actual power value is electrically connected to both ends of the heater and motor and battery.

## Claims

1. An exhaust emission control device for a diesel engine having an exhaust gas passage (2) for discharging exhaust gas,
a filter (5) disposed in the exhaust gas passage (2) for collecting particulates contained in the exhaust gas;
burning means (6, 9) electrically connected to a power supply (11) by way of a power supply line, said burning means (6) (M) being operated by the power supply (11) for burning the particulates to regenerate the filter (5) when the filter collects a predetermined amount of the particulates;
detecting means (15) (16, 17) (18, 19, 20, 21) for detecting an amount of actual power supplied to the burning means (6, 9);
computing means (15) for computing a difference between the amount of actual power supplied to the burning means (6, 9) before burning the particulates, and a predetermined amount of target power for burning the particulates; and
driving means (12, 13) for driving the burning means (6, 9) with an electric duty signal based on the difference computed by the computing means (15), said device characterized by that:
said detecting means (15) (16, 17) (18, 19, 20, 21) being electrically connected to both ends of the burning means (6, 9) for sampling a diferential of the power across the burning means (6, 9).

2. The device as set forth in Claim 1, wherein said detecting means includes a pair of detection lines connected to both ends of said burning means (6, 9), and a controller (15) connected to said detection lines.

3. The device as set forth in Claim 2, wherein said driving means includes switching means (12, 13) disposed in the power supply line, said switching means (12, 13) being arranged to be activated for acctuating the burning means (6, 9) in accordance with an enabling sequence of the duty signal.

4. The device as set forth in Claim 3, wherein said detecting means includes:
contact switches (18, 19, 20, 21) respectively provided in said detection lines for selectively connecting and diconnecting the burning means (6, 9) to the controller (15), wherein said contact switches (18, 19, 20, 21) are closed based on the activation of the switching means (12, 13) to connect the burning means (6, 9) to the controller (15); and
sampling means (16, 17) provided in said detection lines between said contact switches (18, 19, 20, 21) and the controller (15) for receiving the differencial of the voltage across the burning means (6, 9) when said contact switches (18, 19, 20, 21) are closed.

5. The device as set forth in anyone of Claims 2 to 4, wherein said burning means includes an electric heater (6) provided adjacent to said filter (5) to burn particulates collected by said filter (5).

6. The device as set forth in anyone of Claims 2 to 5, wherein said burning means includes an electric air pump (9) for supplying secondary air to said filter (5).

7. The device as set forth in Claim 6, wherein said air pump (9) includes a electric motor (M).

8. The device as set forth in Claim 7, wherein said switching means includes a first and a second transistors (12, 13) for actuating the heater (6) and the motor (M), respectively.

9. The device as set forth in Claims 7 or 8, wherein said sampling means includes a pair of hold circuits (17, 16) for sampling the voltage differentials across the heater (6) and the motor (M), respectively, and wherein said volatage differentials being converted to a digital signal by a A/D converter (22) in the controller (15).

## Patentansprüche

1. Vorrichtung zur Steuerung der Abgasemission von Dieselmotoren mit
einer Abgasanlage (2) zur Ausströmung des Abgases,
einem in der Abgasanlage (2) angeordneten Filter (5) zum Ansammeln von im Abgas enthaltenen Partikeln,
einer elektrisch über eine Leistungsversorgungsleitung mit einer Leistungsversorgung (11) verbundenen Verbrennungseinrichtung (6, 9), wobei die Verbrennungseinrichtung (6) (M) zur Verbrennung der Partikel zur Regeneration des Filters (5) durch die Leistungsversorgung (11) betrieben wird, wenn der Filter eine vorbestimmte Menge von Partikeln gesammelt hat,
einer Erfassungseinrichtung (15) (16, 17) (18, 19, 20, 21) zur Erfassung eines Betrags der tatsächlichen, der Verbrennungseinrichtung (6, 9) zugeführten Leistung,
einer Berechnungseinrichtung (15) zur Berechnung einer Differenz zwischen dem Betrag der der Verbrennungseinrichtung (6, 9) zugeführten tatsächlichen Leistung vor der Verbrennung der Partikel und einem vorbestimmten Betrag einer Soll-Leistung zur Verbrennung der Partikel, und
einer Ansteuerungseinrichtung (12, 13) zur Ansteuerung der Verbrennungseinrichtung (6, 9) mit einem elektrischen Schaltsignal auf der Basis der mittels der Berechnungseinrichtung (15) berechneten Differenz, wobei die Vorrichtung
**dadurch gekennzeichnet ist, daß**
die Erfassungseinrichtung (15) (16, 17) (18, 19, 20, 21) elektrisch mit beiden Anschlüssen der Verbrennungseinrichtung (6, 9) verbunden ist zur Abtastung einer Differenz der Leistung über der Verbrennungseinrichtung (6, 9).

2. Vorrichtung nach Anspruch 1, bei der die Erfassungseinrichtung ein Paar von mit beiden Anschlüssen der Verbrennungseinrichtung (6, 9) verbundenen Erfassungsleitungen und eine mit den Erfassungsleitungen verbundene Steuerungseinrichtung (15) aufweist.

3. Vorrichtung nach Anspruch 2, bei der die Ansteuerungseinrichtung eine in der Leistungsversorgungsleitung angeordnete Schalteinrichtung (12, 13) umfaßt, wobei die Schalteinrichtung (12, 13) aktiviert wird zur Betätigung der Verbrennungseinrichtung (6, 9) in Abhängigkeit von einer Freigabesequenz des Schaltsignals.

4. Vorrichtung nach Anspruch 3, bei der die Erfassungseinrichtung ferner umfaßt:
Kontaktschalteinrichtungen (18, 19, 20, 21), die jeweils in den Erfassungsleitungen zum selektiven Verbinden und Trennen der Verbrennungseinrichtung (6, 9) mit der Steuerungseinrichtung (15) dienen, wobei die Kontaktschalteinrichtungen (18, 19, 20, 21) auf der Basis der Aktivierung der Schalteinrichtungen (12, 13) geschlossen werden zur Verbindung der Verbrennungseinrichtung (6, 9) mit der Steuerungseinrichtung (15), und
eine in den Erfassungsleitungen zwischen den Kontaktschalteinrichtungen (18, 19, 20, 21) und der Steuerungseinrichtung (15) angeordneten Abtasteinrichtung (16, 17) zum Empfangen einer Differenz der an der Verbrennungseinrichtung (6, 9) anliegenden Spannung, wenn die Kontaktschalteinrichtungen (18, 19, 20, 21) geschlossen sind.

5. Vorrichtung nach einem der Ansprüche 2 bis 4, bei der die Verbrennungseinrichtung eine elektrische Heizeinrichtung (6) in Nachbarschaft zu dem Filter (5) aufweist zur Verbrennung der durch den Filter (5) angesammelten Partikel.

6. Vorrichtung nach einem der Ansprüche 2 bis 5, bei der die Verbrennungseinrichtung eine elektrische Luftpumpe (9) umfaßt zur Zuführung von Sekundärluft zum Filter (5).

7. Vorrichtung nach Anspruch 6, bei der die Luftpumpe (9) einen Elektromotor (M) umfaßt.

8. Vorrichtung nach Anspruch 7, bei der die Schalteinrichtung einen ersten und zweiten Transistor (12, 13) aufweist zur jeweiligen Betätigung der Heizeinrichtung (6) und des Motors (M).

9. Vorrichtung nach Anspruch 7 oder 8, bei der die Abtasteinrichtung ein Paar von Halteschaltungen (16, 17) umfaßt zur jeweiligen Abtastung der Spannungsdifferenzen über der Heizeinrichtung (6) und dem Motor (M), und wobei die Spannungsdifferenzen mittels eines in der Steuerungseinrichtung (15) enthaltenen A/D-Wandlers (22) in digitale Signale umgewandelt werden.

## Revendications

1. Un dispositif de contrôle de l'émission d'échappement d'un moteur Diesel comportant un passage des gaz d'échappement (2) pour la décharge des gaz d'échappement,
- un filtre (5) disposé dans le passage des gaz d'échappement (2) pour recueillir les particules contenues dans les gaz d'échappement;
- des moyens de combustion (6, 9), raccordés électriquement à une alimentation (11) par une ligne d'alimentation électrique, lesdits moyens de combustion (6) (M) étant alimentés par la source de courant (11) pour brûler les particules et régénérer le filtre (5) quand le filtre a recueilli une quantité prédéterminée de particules;
- des moyens de détection (15) (16, 17) (18, 19, 20, 21) pour détecter la quantité d'énergie effectivement amenée aux moyens de combustion (6, 9);
- des moyens informatiques (15) pour calculer la différence entre la quantité d'énergie effectivement fournie aux moyens de combustion (6, 9) avant la combustion des particules, et une quantité prédéterminée des puissances nominales pour la combustion des particules, et
- des moyens de combustion (12, 13) pour conduire les moyens de combustion (6, 9) par un signal électrique d'opération basé sur la différence calculé par les moyens informatiques (15).
ce dispositif étant caractérisé en ce que :
- lesdits moyens de détection (15) (16, 17) (18, 19, 20, 21) sont raccordés électriquement aux deux extrémités des moyens de combustion (6, 9) pour le prélèvement du différentiel de puissance dans les moyens de combustion (6, 9).

2. Le dispositif selon la revendication 1, dans lequel lesdits moyens de détection comprend une paire de lignes de détection raccordée aux deux extrémités desdits moyens de combustion (6, 9) et un contrôleur (15) raccordé à ces dites lignes de détection.

3. Le dispositif selon la revendication 2, dans lequel lesdits moyens de combustion comprend des moyens de commutation (12, 13) disposés sur la ligne d'alimentation, lesdits moyens de commutation (12, 13) étant disposés de façon à être activer pour mettre en route les moyens de combustion (6, 9) selon une séquence d'activation du signal opératoire.

4. Le dispositif selon la revendication 3, dans lequel lesdits moyens de détection comprend :
- des commutateurs de contact (18, 19, 20, 21) disposés respectivement dans lesdites lignes de détection pour connecter et déconnecter selectivement les moyens de combustion (6, 9) au contrôleur (15) dans lesquels lesdits commutateurs de contact (18, 19, 20, 21) sont fermés en fonction de l'activation du moyen de commutation (12, 13) pour connecter le moyen de combustion (6, 9) et le contrôleur (15); et
- des moyens de prélèvement (16, 17) disposés dans lesdites lignes de détection entre lesdits commutateurs de contact (18, 19, 20, 21) et le contrôleur (15) pour recevoir la différentiel de voltage entre les deux extrémités des moyens de combustion (6, 9) lorsque les commutateurs de contact (18, 19, 20, 21) sont fermés.

5. Le dispositif selon l'une quelconque des revendications 2 à 4, dans lequel lesdits moyens de combustion comprend un moyen de chauffage électrique disposé de façon adjacente audit filtre (5) pour brûler les particules recueillies par ledit filtre (5).

6. Le dispositif selon l'une quelconque des revendications 2 à 5, dans lequel lesdits moyens de combustion comprend une pompe à air électrique (9) pour amener de l'air secondaire dans ledit filtre (5).

7. Le dispositif selon la revendication (6), dans lequel ladite pompe à air comprend un moteur électrique (M).

8. Le dispositif selon la revendication 7, dans lequel lesdits moyens de commutation comprend un premier et un second transistors (12, 13) pour activer le dispositif de chauffage (6) et le moteur (M), respectivement.

9. Le dispositif selon la revendication 7 ou 8, dans lequel lesdits moyens de prélèvement comprend une paire de circuits de maintien (17, 16) pour prélever la différence de voltage dans le dispositif de chauffage (6) et le moteur (M), respectivement et dans lequel ladite différence de voltage est transformée en un signal numérique par un convertisseur A/D (22) dans le contrôleur (15).
